# DEMANDE DE BREVET EUROPEEN

(11) **EP 1 513 287 A2**
(43) Date de publication de la demande: **09.03.2005**
(21) Numéro de dépôt: 04292145.2
(22) Date de dépôt: 01.09.2004
(51) Int. Cl.: H04L 12/14

(54) **Dispositif de traitement de mesures dans un réseau de communications**

(30) Priorité: 05.09.2003 FR 0310503
(71) Demandeur: ALCATEL, 75008 Paris (FR)
(72) Inventeur: Marilly, Emmanuel, 91240 Saint-Michel-Sur-Orge (FR); Betge-Brezetz, Stéphane, 75015 Paris (FR); Delegue, Gérard, 94230 Cachan (FR); Martinot, Olivier, 91210 Draveil (FR)
(74) Mandataire: Chaffraix, Sylvain

(57) **Abrégé**

Un dispositif de traitement (D), pour un équipement de réseau (RP) d'un réseau de communications équipé d'un module de gestion de comptabilisation et facturation, comprend des moyens de traitement (MT) chargés, d'une part, de déterminer, à partir de valeurs représentatives de paramètres locaux choisis de leur équipement (RP) et/ou de trafics (ou flux) choisis reçus par cet équipement (RP), associés à l'identifiant d'un client du réseau, des données d'utilisation des ressources du réseau correspondant audit identifiant de client, et d'autre part, de transmettre ces données d'utilisation et l'identifiant qui leur est associé au module de gestion de comptabilisation et facturation en vue d'une éventuelle facturation du client désigné par cet identifiant.

## Description

L'invention concerne le domaine des réseaux de communications gérés, et plus particulièrement la comptabilisation de l'utilisation des ressources par les clients de ces réseaux.

Les opérateurs de certains réseaux de communications gérés mettent à la disposition de leurs clients des services de type forfaitaire ou sur mesure reposant sur une utilisation prédéfinie des ressources de leurs réseaux. Le cas forfaitaire correspond généralement à une utilisation des ressources reposant sur des limitations, par exemple en terme de temps d'utilisation, associées à une facturation fixe. Le cas « sur mesure » correspond soit à une facturation fixe reposant sur des limitations choisies, soit à une facturation dépendant de l'utilisation des ressources. Dans un cas comme dans l'autre, il est donc nécessaire d'observer continûment les ressources utilisées par chaque client ou groupe de clients en vue d'une comptabilisation et d'une éventuelle facturation.

A cet effet, un gestionnaire de comptabilisation et facturation, faisant éventuellement partie du système de gestion du réseau (ou NMS pour « Network Management System »), doit tout d'abord collecter pour chaque client ou groupe de clients, auprès des équipements de réseau (qui constituent ce que l'homme de l'art appelle des noeuds), des valeurs ponctuelles et/ou agrégées représentatives de paramètres locaux et de mesures de trafic (ou flux). Puis, le gestionnaire de comptabilisation et facturation doit traiter toutes ces valeurs afin de vérifier si elles correspondent aux modes d'utilisation propres à chaque client ou groupe de clients et/ou de déterminer les facturations qui leurs correspondent.

Une telle procédure centralisée de comptabilisation et facturation n'est pas vraiment flexible et consomme de nombreuses ressources du réseau, notamment en terme de bande passante, de temps de calcul CPU et de volume de mémorisation, ce qui limite les performances du réseau et le nombre de variantes de comptabilisation et facturation.

Une autre solution a été proposée par le brevet américain US 6 584 500 de la société Ericsson. Il s'agit d'un système de facturation basé sur un point de facturation unique, situé à l'accès du réseau, où un compteur associé à l'utilisateur du réseau est incrémenté en fonction d'une classe de tarification associée à la distance du destinataire des paquets transmis avec l'utilisateur.

Cette solution est guère satisfaisante puisqu'elle ne se base que sur une notion de distance (c'est-à-dire de nombre de sauts (ou « *hop* » en anglais) des paquets et est donc très limitative, notamment en ne prenant pas en compte des notions de service. Ainsi, cette méthode n'est pas évolutive et ne permet pas de modifier la politique de facturation. Elle ne permet en outre pas de faire dépendre cette politique de facturation, de la nature des informations transportées. De surcroît, elle s'avère incapable de distinguer différents flux provenant de la même source, et donc d'appliquer des politiques de facturation différentes à ces différents flux.

Une autre proposition a été faite dans la demande de brevet américain US 2002/0083186. Dans cette solution, chaque équipement du réseau modifie un champ dans les paquets qui représente un coût cumulé, qui à la fin pourra servir pour déterminer une facturation globale pour les paquets d'un flux.

Une telle approche nécessite donc de modifier les protocoles de transmission d'information, ce qui nécessite une modification des standards actuels et qui est en pratique pénalisant. Elle nécessite de plus de modifier l'ensemble des équipements d'un réseau pour qu'ils soient à même de modifier les paquets de la façon préconisée. Une telle modification est bien évidemment coûteuse, voire impossible à mettre en oeuvre pour un opérateur d'un réseau comportant un grand nombre d'équipements.

Enfin, par la nécessité de standardisation, il ne peut s'agir que d'une solution peu évolutive, ne permettant pas de déployer aisément de nouvelles politiques de facturation.

L'invention a donc pour but de remédier à tout ou partie des inconvénients précités.

Elle propose à cet effet un dispositif de traitement, pour un équipement de réseau d'un réseau de communications équipé d'un module de gestion de comptabilisation et facturation, comprenant des moyens de traitement chargés, d'une part, de déterminer, à partir de valeurs représentatives de paramètres locaux choisis de leur équipement et/ou de trafics (ou flux) choisis reçus par cet équipement, associés à l'identifiant d'un client ou groupe de clients du réseau, des données d'utilisation des ressources du réseau correspondant audit identifiant de client, et d'autre part, de transmettre ces données d'utilisation et l'identifiant qui leur est associé au module de gestion de comptabilisation et facturation en vue d'une éventuelle facturation de chaque client désigné par cet identifiant.

De la sorte, la comptabilisation de l'utilisation des ressources est décentralisée au niveau de différents équipements du réseau, comme par exemple des routeurs (de coeur ou périphériques) ou des commutateurs. Le volume de données transférées entre les équipements de réseau et le gestionnaire est donc très notablement réduit, ce qui diminue la bande passante utilisée à cet effet et la quantité de traitements que doit effectuer le gestionnaire de comptabilisation et facturation.

On entend ici par trafic aussi bien un flux de paquets de données qu'un agrégat de flux de paquets de données.

L'invention est particulièrement bien adaptée, bien que de façon non limitative, aux réseaux du type dit « à gestion d'équipements à base de règles de politique (ou « policy rules ») ». Mais, elle est également particulièrement bien adaptée aux réseaux dans lesquels seul le module de gestion de comptabilisation et facturation, appartenant éventuellement au système de gestion de réseau, assure une gestion à l'aide de règles de politique spécifiques. Dans ces situations, les moyens de traitement sont alors chargés de déterminer les données d'utilisation en fonction de certaines règles de politique dédiées qui ont été instaurées par leur équipement de réseau.

On entend ici par « règle de politique » une règle de type « si <condition> alors <action> ». Ces règles de politique sont élaborées par l'opérateur (ou le superviseur) du réseau en fonction des équipements qui le constituent et des contrats passés avec ses clients.

Le dispositif selon l'invention, peut comporter d'autres caractéristiques qui pourront être prises séparément ou en combinaison, et notamment :
- des moyens de traitement comprenant des moyens d'analyse chargés de déterminer les valeurs dans l'équipement de réseau associé. Par exemple, les moyens d'analyse sont agencés de manière à effectuer des mesures de paramètres locaux, ou des mesures locales de trafic (ou de flux), ou encore des mesures de trafic (ou de flux) de type « bout-en-bout » (ou « end-to-end »). Tout type de trafic (ou de flux) peut ainsi faire l'objet de mesures, et notamment les trafics de données de réseau, les trafics de données de service, et les trafics de données de clients,
- certaines règles de politique peuvent être représentatives d'au moins une politique calendaire,
- les moyens d'analyse peuvent être chargés, d'une première part, de déduire de certaines des valeurs des données représentatives de profils et/ou de signatures (ou « baselines ») et/ou de tendances et/ou de discontinuités, d'une deuxième part, de comparer ces données à des données de profil et/ou de signature et/ou de tendance et/ou de discontinuité, définies par certaines au moins des règles de politique instaurées dans leur équipement de réseau et associées à des valeurs (de consommation ou d'utilisation) choisies, et d'une troisième part, en cas de reconnaissance d'un profil ou d'une signature ou d'une tendance ou d'une discontinuité, de vérifier si l'utilisation que le client fait des ressources est conforme à celui-ci ou celle-ci, afin, dans l'affirmative, d'associer à cette utilisation une première valeur de consommation (ou données d'utilisation) correspondante(s). Dans la négative, c'est-à-dire en cas de non identification liée au non respect d'une utilisation donnée par un client, on peut également associer à l'utilisation une seconde valeur de consommation, intégrant, par exemple, une pénalité,
- les moyens de traitement peuvent être chargés, d'une première part, de stocker certaines des valeurs déterminées afin de les agréger à des valeurs précédemment déterminées, d'une deuxième part, de comparer chaque agrégation de valeurs à un seuil défini par certaines des règles de politique instaurées, et d'une troisième part, en cas de dépassement du seuil, d'ordonner à leur équipement de réseau qu'il interrompe le trafic qui est associé aux valeurs concernées par le dépassement (par exemple pour la gestion du mode « prépayé » au plus prés de l'équipement),
- les moyens de traitement peuvent être chargés de délivrer des données d'utilisation représentatives de l'utilisation de ressource(s) et/ou d'un profil d'utilisation de ressource(s) pendant un intervalle temporel choisi,
- les moyens de traitement peuvent être agencés de manière à transmettre les données d'utilisation au module de gestion de comptabilisation et facturation automatiquement et périodiquement ou bien à sa requête,
- des moyens de gestion couplés aux moyens de traitement et chargés de les configurer en fonction d'instructions de configuration transmises par le module de gestion de comptabilisation et facturation.

Le dispositif de traitement peut être installé dans un boîtier destiné à être raccordé à un équipement de réseau ou bien il peut être directement intégré dans un équipement de réseau. En fait, il peut être agencé en fonction des besoins en matière de comptabilisation/facturation et/ou des services déjà présents dans l'équipement de réseau, ou bien en fonction de l'utilisation du service de comptabilisation/facturation par l'opérateur.

D'autres caractéristiques et avantages de l'invention apparaîtront à l'examen de la description détaillée ci-après, et des dessins annexés, sur lesquels :
- la figure 1 illustre de façon schématique un réseau de communications comprenant un système de gestion de réseau (NMS), équipé d'un module de gestion de comptabilisation et facturation, et des équipements de réseau selon l'invention,
- la figure 2 illustre de façon schématique un premier exemple de réalisation d'équipement de réseau muni d'un premier exemple de réalisation de dispositif de traitement selon l'invention, et
- la figure 3 illustre de façon schématique un second exemple de réalisation d'équipement de réseau muni d'un second exemple de réalisation de dispositif de traitement selon l'invention.

Les dessins annexés pourront non seulement servir à compléter l'invention, mais aussi contribuer à sa définition, le cas échéant.

L'invention a pour objet de permettre l'optimisation de la comptabilisation et de la facturation de l'utilisation des ressources d'un réseau de communications géré. On entend ici par « réseau géré » un réseau comprenant un système de gestion de réseau ou NMS (pour « Network Management System »).

On considère dans ce qui suit, à titre d'exemple illustratif, que le réseau de communications est au moins en partie de type Internet (IP). Mais, l'invention s'applique à d'autres types de réseau, comme par exemple aux réseaux de transmission de type WDM, SONET ou SDH, aux réseaux de données de type ATM, ou aux réseaux de voix de type classique ou mobile, ou encore aux réseaux mixtes voix-données tels que les réseaux de type NGN.

On entend ici par « réseau IP » un contexte multidomaines constitué d'une somme de domaines et/ou de sous-domaines IP raccordés les uns aux autres.

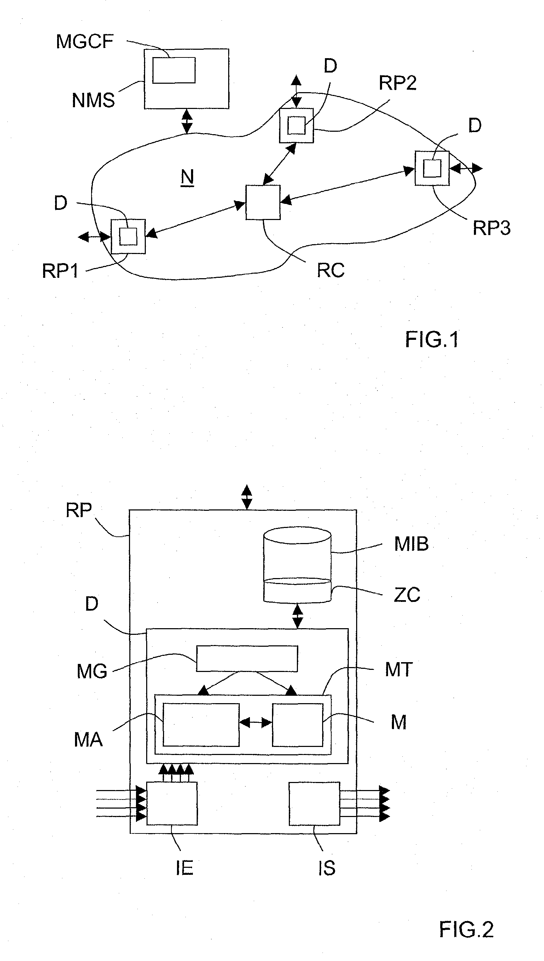

Comme cela est très schématiquement illustré sur la figure 1, un réseau internet N peut être assimilé à un ensemble d'équipements de réseau (ou noeuds) RPi et RC, raccordés entre eux de manière à assurer le routage de paquets de données qu'ils reçoivent, et à un ensemble de terminaux de communication (non représentés), raccordés à certains équipements de réseau (ou noeuds) RPi, éventuellement via un ou plusieurs autres terminaux de type serveur d'accès, de manière à échanger entre eux des paquets de données.

On entend ici par « terminal de communication » tout équipement de réseau capable d'échanger des paquets de données, comme par exemple un ordinateur portable ou fixe, un téléphone fixe ou mobile, un assistant personnel numérique (ou PDA pour « Personal Digital Assistant »), ou un serveur.

Les équipements de réseau (ou noeuds) sont généralement des routeurs périphériques (ou « edge routers ») RPi (ici i = 1 à 3, mais il peut prendre n'importe quelle valeur supérieure ou égale à deux), et des routeurs de coeur (ou « core routers »). On n'a représenté ici qu'un unique routeur de coeur RC, mais il peut y en avoir plusieurs.

Habituellement, les terminaux de communication sont chacun raccordés à l'un des routeurs périphériques RPi, qui leurs servent de noeud d'accès au réseau internet N, et les routeurs périphériques RPi sont généralement reliés entre eux par l'intermédiaire d'un ou plusieurs routeurs de coeur RC.

Par ailleurs, dans un réseau IP traditionnel chaque domaine ou sous-domaine possède ses propres routeurs périphériques RPi et ses propres routeurs de coeur RC. Dans un réseau de type IP/MPLS, les équipements de réseau sont appelés « Label Switch Routers » et se présentent soit sous la forme de routeurs, soit sous la forme de commutateurs ATM contrôlés par une fonction de routage.

Le réseau N comporte également un système de gestion de réseau ou NMS (pour « Network Management System ») couplé, notamment, à ses équipements de réseau RPi et RC. Ce système de gestion de réseau NMS, également appelé système d'exploitation du réseau, permet notamment au gestionnaire (ou superviseur) du réseau de gérer les équipements de réseau RPi et RC qui le constituent.

A cet effet, les équipements de réseau RPi et RC sont agencés de manière à pouvoir échanger des données selon un protocole de gestion de réseau avec le système de gestion NMS, comme par exemple le protocole SNMP (pour « Simple Network Management Protocol » RFC 2571-2580). Bien entendu, d'autres protocoles de gestion de réseau peuvent être utilisés, et notamment TL1, CORBA ou CMISE/CMIP.

Comme indiqué dans la partie d'introduction, l'opérateur d'un réseau géré, qui met à la disposition de ses clients des services associés à des ressources, doit observer et comptabiliser l'utilisation que chaque client (ou groupe de clients) fait des ressources du réseau afin qu'elle corresponde au contrat qu'il a passé avec lui.

Dans un réseau géré, la comptabilisation des ressources utilisées par chaque client et les actions qui en découlent, comme notamment l'interruption d'une partie d'une offre multiservice en cas de dépassement ou la facturation, est supervisée par un module de gestion de comptabilisation et facturation MGCF(ci-après appelé module MGCF). Ce module MGCF peut être implanté dans le système de gestion de réseau NMS, comme illustré sur la figure 1. Mais, il peut également être externe au NMS, et éventuellement raccordé à celui-ci. Dans ce qui suit, on considère à titre d'exemple que le module MGCF fait partie intégrante du système de gestion de réseau NMS.

Dans un réseau géré classique, le module de gestion de comptabilisation et facturation MGCF (ci-après appelé module MGCF) assure lui-même la comptabilisation de l'utilisation des ressources de chaque client à partir de données d'information transmises par les équipements de réseau RP et RC et représentatives de mesures effectuées sur leurs paramètres locaux respectifs et sur les trafics (ou flux) qu'ils reçoivent.

L'invention permet de procéder différemment. Elle propose à cet effet d'effectuer directement au niveau d'équipements de réseau RP et/ou RC tout ou partie de la comptabilisation de l'utilisation des ressources qu'ils contrôlent respectivement.

Plus précisément, l'invention propose d'implanter dans (ou de coupler à) certains au moins des équipements de réseau, et notamment dans (ou à) ses routeurs périphériques RP (en particulier ceux qui permettent aux terminaux de se raccorder au réseau N), un dispositif de traitement D dédié au moins à la comptabilisation.

On considère dans ce qui suit que les dispositifs de traitement D sont implantés dans les routeurs périphériques RP du réseau N. Mais, en variante, certains au moins des dispositifs de traitement D pourraient comporter un boîtier raccordé à un routeur périphérique RP (ou à un autre type d'équipement de réseau).

Comme cela est illustré sur la figure 2, un dispositif de traitement D, selon l'invention, comprend au moins un module de traitement MT chargé tout d'abord de déterminer des données représentatives de l'utilisation que chaque client qui lui est rattaché fait des ressources du réseau qu'il contrôle. Cette détermination s'effectue à partir de valeurs représentatives de paramètres locaux choisis du routeur périphérique RP, dans lequel le dispositif D est implanté, et/ou d'un ou plusieurs trafics (ou flux) choisis, reçus par ce routeur périphérique RP, qui sont associés à chaque identifiant de client ou de groupe de clients. Le module de traitement MT est ensuite chargé de transmettre les données d'utilisation qu'il a déterminées, et l'identifiant qui leur est associé, au module MGCF du système de gestion de réseau NMS afin qu'il procède à une éventuelle facturation du client désigné par l'identifiant.

Chaque dispositif de traitement D est donc spécifiquement configuré en fonction des types d'observation et de comptabilisation qu'il doit assurer compte tenu des clients qui lui sont rattachés et des ressources du réseau qu'il contrôle. Il est cependant important de noter qu'une même configuration peut éventuellement concerner un ensemble de dispositifs de traitement D.

Cette configuration peut s'effectuer de différentes manières. Cependant, il est particulièrement avantageux qu'elle se fasse par l'intermédiaire de ce que l'homme de l'art appelle des règles de politique (ou « policy rules »). Ce type de configuration impose, comme ce sera le cas dans ce qui suit à titre d'exemple illustratif, qu'au moins le module de gestion de comptabilisation et facturation MGCF du réseau soit agencé de manière à gérer les dispositifs de traitement D à l'aide de règles de politique. Mais, bien entendu, le réseau peut être intégralement du type dit « à gestion d'équipements à base de règles de politique ».

Une règle de politique est une règle de type « si <condition> alors <action> ». Des jeux de règles de politiques constituent une politique conçue par l'opérateur du réseau N et dédiée à un type de gestion particulier, comme par exemple l'observation et la comptabilisation. Les règles de politique sont transmises aux différents équipements gérés du réseau N par le système de gestion de réseau NMS. Elles définissent les traitements que doit effectuer l'équipement de réseau considéré afin de mettre en oeuvre la portion de politique définie par les règles de politique reçues.

Dans ce type de réseau, chaque équipement de réseau géré comporte une base d'informations de gestion MIB (« Management Information Base »), également appelée base d'instances d'objets. Classiquement chaque MIB stocke des données de gestion représentatives de valeurs de champs d'information qui caractérisent l'équipement géré associé. Par ailleurs, chaque MIB est associée à une définition de base d'informations de gestion (non représentée), également appelée définition de MIB, stockée dans le système de gestion de réseau NMS.

Les règles de politique, et notamment celles dédiées à l'observation et à la comptabilisation, peuvent être stockées dans un module dédié (éventuellement avec un moteur de règles sur lequel on reviendra plus loin). Mais, ces règles de politique peuvent être également stockées dans une zone dédiée de la MIB.

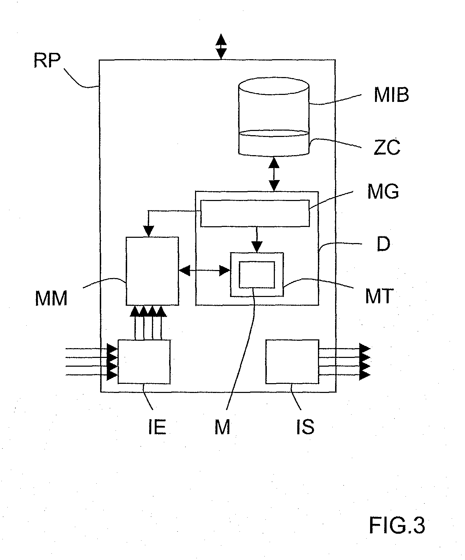

Les valeurs, qui permettent au module de traitement MT de déterminer les données d'utilisation destinées au NMS, peuvent être soit déterminées par le dispositif de traitement D, comme illustré sur la figure 2, soit déterminées par le routeur périphérique RP et fournies au dispositif de traitement D, comme on le verra plus loin en référence à la figure 3.

Dans l'exemple de réalisation illustré sur la figure 2, le dispositif de traitement D comporte un module d'analyse MA chargé d'effectuer toutes les mesures nécessaires au module de traitement MT pour déterminer les données d'utilisation qu'il doit transmettre au système de gestion NMS, conformément aux règles de politique instaurées.

Le module d'analyse MA est donc notamment chargé de filtrer certains trafics (ou flux) reçus par les interfaces d'entrée IE du routeur RP dans lequel il est implanté, compte tenu des règles de politique instaurées, afin d'effectuer sur ceux-ci des mesures qui, selon le type du routeur, peuvent être de type local ou de type « bout-en-bout ». Les autres trafics non filtrés, tout comme ceux filtrés, poursuivent ensuite leur trajet et quittent le routeur RP par ses interfaces de sortie IS.

Un trafic de type bout-en-bout est un flux de paquets de données ou un paquet de données d'un flux qui traverse intégralement plusieurs réseaux ou un réseau ou au moins un domaine ou sous-domaine d'un réseau à contexte multidomaines, tel qu'un réseau IP. On entend ici par « traverser intégralement » le fait de pénétrer dans un réseau ou un domaine par l'un de ses routeurs périphériques RPi, dit routeur d'entrée (ou « ingress router ») et de ressortir de celui-ci par un autre de ses routeurs périphériques RPi', dit routeur de sortie (ou « egress router»). Il est important de noter que dans le cas de trafics de type bout-en-bout des mesures bout-en-bout peuvent être soient effectuées en deux points d'extrémité du réseau, indépendamment de ce qui se trouve intercalé entre ces deux points de mesure, soit en l'un des points d'extrémité. Chaque point de mesure peut être placé à une extrémité d'un réseau, ou d'une fédération de réseau, ou encore d'un ou plusieurs domaines d'un réseau multidomaines. Par exemple, dans le cas d'un tunnel de type MPLS d'un LSP, la mesure du tunnel (comme par exemple le débit) se fait simplement à l'entrée dudit tunnel par une simple lecture des paramètres correspondants stockés dans la MIB.

Le module d'analyse MA peut effectuer des mesures sur des trafics (ou flux) de données de réseau, ou des trafics (ou flux) de données de clients, ou encore des trafics (ou flux) de données d'application ou de service, par exemple. Les mesures peuvent par exemple porter sur des paramètres UDP ou TCP, ou sur le trafic internet d'un client, ou sur la voix sur IP, ou sur la vidéo à la demande (VoD) (paramètres MPEG), ou sur un trafic (ou flux) d'un LSP particulier, ou encore sur un trafic d'un réseau privé virtuel de type IP-VPN.

Par ailleurs, le module d'analyse MA peut être agencé de manière à déterminer les valeurs prises par des paramètres locaux du routeur périphérique RP, utiles à la comptabilisation. Ces mesures de paramètres locaux portent sur des flux agrégés, et non sur un unique flux comme c'est le cas des mesures locales ou bout-en-bout effectuées sur les trafics. Il s'agit par exemple d'une mesure locale de la bande passante au niveau d'une interface du routeur périphérique RP, ou d'une mesure de l'utilisation de ses capacités de calcul (CPU), ou encore d'une mesure du taux de perte de paquets.

En outre, une partie du module d'analyse MA peut éventuellement être agencée de manière à effectuer des analyses plus ou moins complexes sur les trafics (ou flux) filtrés. Cette partie peut ainsi être chargée de déterminer dans un premier temps des données représentatives, pour un identifiant de client donné, d'un profil ou d'une signature (ou « baseline ») ou d'une tendance ou d'une discontinuité. Une fois ces données déterminées, le module d'analyse MA les compare aux données du profil ou de la signature ou de la tendance ou de la discontinuité qui sont définies, pour le client considéré, par certaines règles de politique instaurées dans son routeur RP et qui sont associées à des valeurs de consommation (ou données d'utilisation) prédéfinies. Puis, lorsque le module d'analyse MA reconnaît un profil ou une signature ou une tendance ou une discontinuité, il vérifie si l'utilisation des ressources par le client est conforme à celui-ci ou celle-ci. Dans l'affirmative, le module d'analyse MA associe à cette utilisation une première valeur de consommation (ou données d'utilisation) correspondante(s). Dans la négative, le module d'analyse MA associe à l'utilisation une seconde valeur de consommation (ou données d'utilisation) correspondante(s), tenant compte par exemple d'une pénalité étant donné que dans cette situation c'est le client qui ne respecte pas l'utilisation prédéfinie.

Enfin, la MIB peut éventuellement servir d'interface avec le module d'analyse MA.

Il est important de noter que le module d'analyse MA peut être utilisé par l'équipement de réseau pour effectuer d'autres mesures de trafic (ou de flux) que celles dédiées à la comptabilisation de la consommation (ou utilisation) de ressources. Il peut être également « bridé » de manière à ne fournir en standard que des mesures utiles au module de traitement MT, et une fois débridé il peut éventuellement permettre à l'opérateur d'effectuer d'autres types de mesures.

Comme indiqué précédemment, le module de traitement MT est chargé de déterminer des données d'utilisation à partir des valeurs qui lui sont, ici, fournies par le module d'analyse MA auquel il est couplé.

Plus précisément, le module de traitement MT comprend un module de calcul MC chargé de calculer l'utilisation (ou la consommation) des ressources que fait chaque client dont il a la charge, en fonction de la politique de comptabilisation qui lui est associée et/ou de la politique calendaire de l'opérateur.

La politique calendaire est ici définie par des règles de politique dédiées. Elle définit par exemple des périodes creuses et des périodes pleines, qui correspondent à des tarifications différentes. Il est important de noter que la politique calendaire peut être utilisée par le module d'analyse MA lorsqu'il détermine les valeurs et/ou par le module de calcul MC lorsqu'il détermine les données d'utilisation à partir desdites valeurs.

Le calcul de l'utilisation (ou de la consommation) peut être destiné à délivrer des données d'utilisation de type instantané ou de type agrégé (c'est-à-dire cumulé dans le temps). Afin de permettre le calcul de données d'utilisation agrégées, le module de calcul MC peut stocker certaines valeurs reçues dans une mémoire dédiée ou bien dans une zone dédiée ZC de la MIB, comme illustré sur la figure 2. Le stockage dans une zone dédiée ZC de la MIB permet en outre au système de gestion NMS de lire directement les données d'utilisation de l'extérieur. Les nouvelles valeurs reçues, qui correspondent aux données d'utilisation agrégées, peuvent être additionnées aux anciennes valeurs de même type, le résultat de l'addition remplaçant alors le cumul précédent dans la zone dédiée ZC.

Il est important de noter que les données d'utilisation, qui sont déterminées par le module de calcul MC, ne sont pas obligatoirement représentatives d'une consommation (ou utilisation). Elles peuvent en effet être représentatives d'un profil de consommation (ou d'utilisation) ou bien d'un comportement.

Tout type de comptabilisation peut être envisagé. Par exemple, on peut utiliser des unités de valeur de consommation (ou CVU). Une telle unité CVU peut par exemple correspondre à une quantité X de bande passante utilisée pendant une heure en période pleine, ou à une quantité Y de bande passante utilisée pendant une heure en période creuse, ou encore à une durée Z d'utilisation d'une application.

Le module de calcul MC (du module de traitement MT) peut également comporter un moteur de règles (ou « rule engine ») permettant de définir plusieurs catégories de règles de politique, comme par exemple des règles de politique basiques ou complexes.

Des règles de politique basiques peuvent par exemple définir l'utilisation de ressources pendant un intervalle temporel choisi.

Des règles de politique complexes (ou avancées) peuvent par exemple définir une utilisation de ressources adaptable en fonction de circonstances particulières et/ou modifiable. Par exemple des règles de politique peuvent permettre de gérer une utilisation de ressources (ou service) en mode prépayé. Dans ce cas, le module de traitement MT, et plus précisément son module de calcul MC, est chargé d'ordonner à son routeur périphérique RP d'empêcher le client désigné de continuer à utiliser des ressources lorsqu'il a épuisé ses unités de valeurs de consommation prépayées (ou CVUs).

Il est important de noter que cette fonctionnalité de gestion d'interdiction d'utilisation peut être mise en oeuvre dans d'autres situations, et notamment dans le cas de contrats forfaitaires, par exemple pour gérer les durées d'utilisation respectives de chaque service objet du contrat. A titre d'exemple illustratif, un contrat peut porter, d'une première part, sur un premier service correspondant à un accès à Internet illimité, d'une deuxième part, sur un deuxième service correspondant à une utilisation de la voix sur IP (VoIP) selon un premier tarif pendant les périodes bleues (périodes creuses) et selon un second tarif pendant les autres périodes, et d'une troisième part, sur un troisième service correspondant à une utilisation du service de vidéo à la demande (ou VoD) limitée à une heure par jour. Dans ce cas, dès que le module de calcul MC détecte, à partir des valeurs fournies par le module d'analyse MA, que le client a utilisé le troisième service pendant plus d'une heure il ordonne à son routeur périphérique RP d'empêcher le client de poursuivre ce service VoD jusqu'au lendemain. De même, lorsque le module de calcul MC détecte, à partir des valeurs fournies par le module d'analyse MA, que le client utilise le deuxième service en dehors d'une période bleue, il modifie son mode de comptabilisation de la consommation.

Toute autre fonctionnalité utile à une comptabilisation particulière peut être envisagée. Ainsi, le module de traitement MT peut être agencé pour répondre à des requêtes des clients qu'il gère, reçues par son routeur périphérique RP et demandant l'envoi de la valeur en cours de leur consommation. Plus précisément, à réception d'une telle requête, le module de traitement MT accède à la zone dédiée ZC de la MIB afin d'en extraire la valeur cumulée représentative de la consommation du client concerné, puis il ordonne au routeur périphérique RP de transmettre cette valeur au terminal du client requérant. Mais, l'opérateur peut également avoir directement accès à ce paramètre stocké dans la zone dédiée ZC de la MIB.

Comme illustré sur la figure 2, le dispositif de traitement D selon l'invention peut également comporter un module de gestion MG couplé au module de traitement MT, et notamment à son module de calcul MC et/ou à son module d'analyse MA, et chargé de les configurer en fonction d'instructions de configuration reçues du système de gestion de réseau NMS, et notamment de son module MGCF. Ces instructions de configuration sont préférentiellement des règles de politique dédiées à la configuration des modules du dispositif de traitement D.

Ces instructions (ou règles de politiques) peuvent être transmises par le module MGCF soit directement sous la forme de commandes conformes au protocole de gestion (ici SNMP) du routeur périphérique RP concerné, soit via une interface de programmation d'application (ou API pour « Application Programming Interface »), soit encore via la MIB.

Par ailleurs, le module de gestion MG peut être, par exemple, agencé de manière à interagir avec la MIB soit pour être configuré par celle-ci, soit pour établir ou obtenir des entrées de celle-ci. La MIB peut en effet être statique (pour établir et fournir des entrées), configurable (pour établir et fournir des entrées et configurer le module de gestion MG), ou programmable (pour créer de nouvelles entrées et établir et fournir des entrées lorsqu'elle reçoit du système de gestion NMS une nouvelle politique de comptabilisation).

Afin d'éviter les attaques ou les fraudes, il est préférable de sécuriser les échanges relatifs à la configuration, à la gestion et à l'envoi de rapports.

On va maintenant décrire un exemple d'instauration de règles de politique, dédiées à la comptabilisation d'un client C1, dans un routeur périphérique RP.

Dans une première étape, l'opérateur signifie au module MGCF qu'il souhaite que l'on instaure pour le client C1 la politique de comptabilisation définie par les règles de haut niveau suivantes :
- pour l'accès à Internet appliquer la politique de comptabilisation d'accès standard,
- pour l'utilisation de la voix sur IP (VolP) appliquer la politique de comptabilisation de la période bleue (période creuse), et
- pour le service de vidéo à la demande (ou VoD) appliquer la politique de comptabilisation de VoD dite « une heure par mois ».

Dans une deuxième étape, le module MGCF transforme ces règles de haut niveau en règles de politique (de niveau inférieur), données ci-dessous.

Pour le client C1 disposant de l'adresse IP 132.25.24.124 :
- si l'accès à Internet (par exemple port d'application XXX ou protocole) est utilisé pendant le mois en cours, alors augmenter la valeur de la consommation d'une unité de valeur de consommation (CVU),
- si la voix sur IP (par exemple port d'application YYY ou protocole) est utilisée pendant les périodes pleines, alors augmenter la valeur de la consommation de deux unités de valeur de consommation (CVUs) par période d'utilisation de 60 secondes, et si la voix sur IP est utilisée pendant les périodes creuses, alors augmenter la valeur de la consommation de deux unités de valeur de consommation (CVUs) par période d'utilisation de 120 secondes, et enfin si la voix sur IP est utilisée pendant les autres périodes, alors augmenter la valeur de la consommation de deux unités de valeur de consommation (CVUs) par période d'utilisation de 90 secondes,
- si la vidéo à la demande (par exemple port d'application ZZZ ou protocole) est utilisée, alors calculer le temps d'utilisation. Lorsque la durée d'utilisation devient égale à une heure, alors interrompre tout flux vidéo jusqu'à la fin du mois en cours,
- transmettre à l'adresse IP 155.63.98.125 (module MGCF), chaque premier jour du mois, la valeur de la consommation (données d'utilisation) du client C1, en utilisant le protocole SNMP.

Le module MGCF transmet ensuite les règles de politique au dispositif de traitement D qui est implanté dans le (ou couplé au) routeur périphérique RP en charge du client C1.

Dans une troisième étape, le dispositif de traitement D instaure les règles de politique reçues en configurant le module d'analyse MA de sorte qu'il filtre les flux de données, du client C1 disposant de l'adresse IP 132.25.24.124, qui parviennent sur les ports XXX, YYY et ZZZ de son routeur périphérique RP (ou qui utilisent les protocoles désignés). Lorsqu'un tel flux est détecté et identifié, le module d'analyse MA effectue les mesures conformément à sa configuration et transmet les valeurs des mesures au module de calcul MC afin qu'il détermine la consommation de ce flux (données d'utilisation) compte tenu de règles de politique de comptabilisation et des éventuelles règles de politique calendaire. Chaque premier jour du mois un rapport contenant la valeur de la consommation du client C1 est alors transmis au module MGCF.

Dans une quatrième étape, lorsque le module MGCF reçoit le rapport, il procède à la facturation du client C1 compte tenu de la valeur de sa consommation et de la politique locale de facturation, ainsi qu'éventuellement de la valeur de la monnaie locale. Il peut ensuite transmettre la facture au client C1 par tout moyen approprié (lettre, télécopie ou courrier électronique).

Comme évoqué précédemment et comme illustré sur la figure 3, le dispositif de traitement D selon l'invention peut ne pas comporter de module d'analyse MA. Ce dernier est alors remplacé par un simple module de mesures MM faisant partie de l'équipement de réseau RP ou couplé à celui-ci. Dans ce cas, le module de traitement MT comporte essentiellement un module de calcul MC qui remplie également les fonctionnalités d'analyse précédemment décrites et assurées par le module d'analyse MA. Par ailleurs, le module de gestion MG est préférentiellement chargé de configurer le module de mesures MM conformément aux règles de politique reçues, de sorte qu'il puisse délivrer au module de calcul MC du module de traitement MT les valeurs nécessaires à la détermination des données d'utilisation. Le fonctionnement du dispositif de traitement D est alors sensiblement identique à celui précédemment décrit en référence à la figure 2.

Le dispositif de traitement D selon l'invention, et notamment son module de traitement PM et son module de gestion MG, peuvent être réalisés sous la forme de circuits électroniques, de modules logiciels (ou informatiques), ou d'une combinaison de circuits et de logiciels.

L'invention ne se limite pas aux modes de réalisation de dispositif de traitement et d'équipement de réseau décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans un réseau de communications à gestion d'équipements à base de règles de politique. Mais, l'invention est également, et notamment, adaptée aux réseaux dans lesquels seul le gestionnaire de comptabilisation et facturation assure une gestion à l'aide de règles de politique spécifiques.

Par ailleurs, dans ce qui précède on a décrit un module de gestion de comptabilisation et facturation intégré dans le système de gestion du réseau (NMS). Mais, ce module de gestion de comptabilisation et facturation peut être externe au NMS, et éventuellement raccordé à celui-ci.

## Revendications

1. Dispositif (D) de traitement pour un équipement de réseau (RP) d'un réseau de communications (N) équipé d'un module de gestion de comptabilisation et facturation (MGCF), **caractérisé en ce qu'**il comprend des moyens de traitement (MT) agencés
i) pour déterminer, à partir de valeurs représentatives de paramètres locaux choisis dudit équipement (RP) et/ou de trafics choisis reçus par ledit équipement (RP), associés à un identifiant d'au moins un client dudit réseau, des données d'utilisation des ressources du réseau (N) correspondant audit identifiant de client, en fonction de règles de politique dédiées instaurées par ledit équipement de réseau (RP) associé et
ii) pour transmettre lesdites données d'utilisation et l'identifiant associé audit module de gestion de comptabilisation et facturation (MGCF) en vue d'une éventuelle facturation de chaque client désigné par ledit identifiant.

2. Dispositif selon la revendication précédente, **caractérisé en ce que** lesdits moyens de traitement (MT) comprennent des moyens d'analyse (MA) et agencés pour déterminer lesdites valeurs dans ledit équipement de réseau (RP) associé.

3. Dispositif selon la revendication précédente, **caractérisé en ce que** lesdits moyens d'analyse (MA) sont agencés pour effectuer des mesures choisies dans un groupe comprenant au moins des mesures de paramètres locaux, des mesures locales de trafic passant par ledit équipement de réseau et des mesures de trafic de type « bout-en-bout » passant par ledit équipement de réseau.

4. Dispositif selon la revendication précédente, **caractérisé en ce que** lesdits trafics sont choisis dans un groupe comprenant au moins des trafics de données de réseau, des trafics de données de service, et des trafics de données de clients.

5. Dispositif selon l'une des revendications 1 à 4, **caractérisé en ce que** certaines desdites règles de politique sont représentatives d'au moins une politique calendaire.

6. Dispositif selon l'une des revendications 2 à 5, **caractérisé en ce que** lesdits moyens d'analyse (MA) sont agencés i) pour déduire de certaines desdites valeurs des données représentatives de profils et/ou de signatures et/ou de tendances et/ou de discontinuités, ii) pour comparer ces données à des données de profil et/ou de signature et/ou de tendance et/ou de discontinuité définies par certaines au moins desdites règles de politique instaurées dans ledit équipement de réseau associé et associées à des valeurs choisies, et iii) en cas de reconnaissance d'un profil et/ou d'une signature et/ou d'une tendance et/ou d'une discontinuité, pour vérifier si l'utilisation que le client fait des ressources lui est conforme, et, dans l'affirmative, pour associer auxdites données déduites l'une desdites valeurs choisies.

7. Dispositif selon l'une des revendications précédentes, **caractérisé en ce que** lesdits moyens de traitement (MT) sont agencés i) pour stocker dans une mémoire (ZC) certaines desdites valeurs déterminées de manière à les agréger à des valeurs précédemment déterminées, ii) pour comparer chaque agrégation de valeurs à un seuil défini par certaines desdites règles de politique, et iii) en cas de dépassement dudit seuil, pour ordonner audit équipement de réseau (RP) associé l'interruption du trafic associé aux valeurs objet dudit dépassement.

8. Dispositif selon l'une des revendications précédentes, **caractérisé en ce que** lesdits moyens de traitement (MT) sont agencés pour délivrer des données d'utilisation représentatives d'une utilisation de ressource et/ou d'un profil d'utilisation de ressource pendant un intervalle temporel choisi.

9. Dispositif selon l'une des revendications précédentes, **caractérisé en ce que** lesdits moyens de traitement (MT) sont agencés pour transmettre lesdites données d'utilisation automatiquement et périodiquement audit module de gestion de comptabilisation et facturation (MGCF).

10. Dispositif selon l'une des revendications précédentes, **caractérisé en ce que** lesdits moyens de traitement (MT) sont agencés pour transmettre lesdites données d'utilisation sur ordre dudit module de gestion de comptabilisation et facturation (MGCF).

11. Dispositif selon l'une des revendications précédentes, **caractérisé en ce qu'**il comprend des moyens de gestion (MG) couplés auxdits moyens de traitement (MT) et agencés pour les configurer en fonction d'instructions de configuration transmises par ledit module de gestion de comptabilisation et facturation (MGCF).

12. Dispositif selon l'une des revendications précédentes, **caractérisé en ce qu'**il est installé dans un boîtier propre à être raccordé à un équipement de réseau (RP).

13. Équipement de réseau (RP) pour un réseau de communications (N) équipé d'un module de gestion de comptabilisation et facturation (MGCF), **caractérisé en ce qu'**il comprend un dispositif de traitement (D) selon l'une des revendications précédentes.

14. Équipement de réseau selon la revendication précédente, **caractérisé en ce qu'**il est choisi dans un groupe comprenant au moins des routeurs et des commutateurs.
